# EUROPEAN PATENT APPLICATION

(11) **EP 4 629 487 A1**
(43) Date of publication of application: **08.10.2025**
(21) Application number: 23897497.6
(22) Date of filing: 15.11.2023
(51) Int. Cl.: H02K 7/09, H02K 21/14

(54) **BEARINGLESS MOTOR**

(30) Priority: 28.11.2022 JP 2022189669
(71) Applicant: Panasonic Intellectual Property Management Co., Ltd., Kadoma-shi, Osaka 571-0057 (JP)
(72) Inventor: SUZUKI, Kenta, 571-0057 Osaka (JP); MORIMOTO, Eiki, 571-0057 Osaka (JP)
(74) Representative: SSM Sandmair
(86) International application number: PCT/JP2023/041047
(87) International publication number: WO 2024/116846

(57) **Abstract**

A bearingless motor (1) includes a rotor (2) and a stator (3). The stator (3) includes a stator core (30) and a winding (33). The winding (33) includes a motor winding (4) and a suspension winding (5). The motor winding (4) generates a magnetomotive force that generates a torque in the rotor (2). The suspension winding (5) is independent of the motor winding (4), and adjusts a position of an axial center (20) of the rotor (2) relative to the stator (3). The motor winding (4) includes a main winding (41) that generates the magnetomotive force and an auxiliary winding (42) that is independent of the main winding (41). The auxiliary winding (42) is configured to reduce a component of an order that is not involved in the torque of the rotor (2) in a Fourier series expansion of (θ). θ (rad) is an angle between a given point of the stator (3) and a reference line (11) around the axial center (20). F (θ) is a function of the magnetomotive force relative to θ.

## Description

### TECHNICAL FIELD

The present disclosure relates to a bearingless motor. More specifically, the present disclosure relates to a bearingless motor that includes motor windings and suspension windings.

### BACKGROUND ART

PTL 1 discloses a bearingless motor in which motor windings and suspension windings are wound around stator core pieces arranged on the outer periphery of a rotor. The stator core pieces include upper stator teeth and lower stator teeth that are circumferentially divided into a plurality of teeth. The motor windings and the suspension windings are wound around respective stator core pieces.

With this configuration, the motor windings and the suspension windings wound around respective stator core pieces radially spread, thus minimizing the height of a pump chamber.

### Citation List

### Patent Literature

PTL 1: Japanese Unexamined Patent Application Publication No. 2009-273214

### SUMMARY OF THE INVENTION

However, in the bearingless motor disclosed in PTL 1, pulsations occur in the support force that supports the rotor due to the spatial harmonic components of the magnetomotive force generated by the windings. This makes it difficult to obtain a stabilized support force for the rotor.

An object of the present disclosure is to provide a bearingless motor capable of easily obtaining a stabilized support force for the rotor.

A bearingless motor according to one aspect of the present disclosure includes a rotor and a stator. The stator includes a stator core and a winding wound around the stator core. The winding includes: a motor winding and a suspension winding. The motor winding generates a magnetomotive force that generates a torque in the rotor. The suspension winding is independent of the motor winding and adjusts a position of an axial center of the rotor relative to the stator. The motor winding includes: a main winding that generates the magnetomotive force; and an auxiliary winding that is independent of the main winding. The auxiliary winding is configured to reduce a component of an order that is not involved in the torque of the rotor in a Fourier series expansion of F (θ). θ (rad) is an angle between a given point of the stator (3) and a reference line (11) around the axial center (20). F (θ) is a function of the magnetomotive force relative to the angle θ.

The bearingless motor according to the present disclosure is capable of easily obtaining a stabilized support force for the rotor.

### BRIEF DESCRIPTION OF THE DRAWINGS

[FIG. 1] FIG. 1 is a cross-sectional view of a bearingless motor, in a view from a direction in which an axial center extends, according to Embodiment 1 of the present disclosure.
[FIG. 2] FIG. 2 is a schematic lateral view of the bearingless motor with a partial cross-sectional view.
[FIG. 3] FIG. 3 is a cross-sectional view of a bearingless motor according to Embodiment 2 of the present disclosure in a view from a direction in which an axial center extends.
[FIG. 4A] FIG. 4A illustrates a relationship between each spatial order and amplitude of magnetomotive force of the bearingless motor according to Embodiment 2.
[FIG. 4B] FIG. 4B illustrates a relationship between each spatial order and amplitude of magnetomotive force of a bearingless motor according to a conventional example.
[FIG. 5A] FIG. 5A illustrates a relationship between support force and angle θ in the bearingless motor according to Embodiment 2.
[FIG. 5B] FIG. 5B illustrates a relationship between support force and angle θ in the bearingless motor according to the conventional example.

### DESCRIPTION OF EMBODIMENTS

### (1) Outline

A bearingless motor according to the present disclosure will be described. Note that each embodiment described below is only an exemplary one of various embodiments according to the present disclosure. The embodiment described below may be readily modified in various manners, depending on a design choice or any other factor, as long as the object of the present disclosure can be achieved.

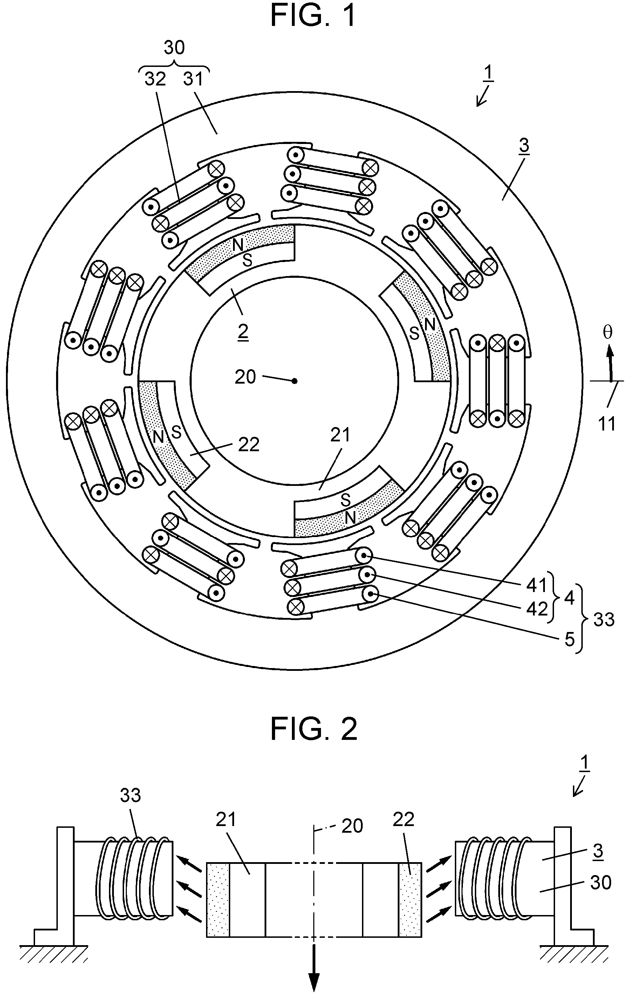

As illustrated in FIG. 1, bearingless motor 1 according to the present disclosure includes rotor 2 and stator 3. Stator 3 includes stator core 30 and windings 33 wound around stator core 30. Windings 33 includes motor windings 4 and suspension windings 5. Motor windings 4 generate a magnetomotive force that generates torque in rotor 2. Suspension windings 5 are independent of motor windings 4, and adjust the position of axial center 20 of rotor 2 relative to stator 3. Motor windings 4 include main windings 41 that generate a magnetomotive force and auxiliary windings 42 that are independent of main windings 41. Auxiliary windings 42 are configured to reduce the components of the orders that are not involved in the torque of rotor 2 in the Fourier series expansion of F(θ). θ (rad) is an angle between a given point of the stator 3 and a reference line 11 around the axial center 20. F (θ) is a function of the magnetomotive force relative to the angle θ.

Bearingless motor 1 according to the present disclosure is capable of easily obtaining a stabilized support force for the rotor.

### (2) Embodiment 1

Bearingless motor 1 according to Embodiment 1 will be described below with reference to FIG. 1 and FIG. 2. Bearingless motor 1 includes rotor 2 and stator 3. Bearingless motor 1 according to Embodiment 1 is a consequent pole motor. Bearingless motor 1 is a three-phase AC motor.

### (2.1) Rotor

Rotor 2 rotates around axial center 20. Rotor 2 is integrally attached to a rotating body (not illustrated) to transmit torque and power to the rotating body. Rotor 2 includes rotor core 21 having a circular ring shape and a plurality of magnets 22. In Embodiment 1, bearingless motor 1 is a consequent pole motor with a plurality of magnets 22 (four in the illustrated example) spaced circumferentially around axial center 20 of rotor core 21. Magnets 22 are provided on rotor core 21 such that the same poles (S poles in the illustrated example) face toward axial center 20. With this, on the surface of rotor core 21, N poles are formed around axial center 20 at positions where magnets 22 are circumferentially provided, and the portions between adjacent magnets 22 behave like S poles.

### (2.2) Stator

Stator 3 includes stator core 30 and windings 33 wound around stator core 30.

### (2.2.1) Stator Core

Stator core 30 includes yoke 31 and a plurality of teeth 32 protruding from the inner peripheral surface of yoke 31 toward the center of yoke 31.

### (2.2.1.1) Yoke

Yoke 31 has a circular ring shape when viewed from the direction in which axial center 20 extends (hereinafter, referred to as an axial direction). Yoke 31 includes a plurality of steel sheets stacked in the axial direction. The steel sheets are formed by electromagnetic steel sheets, such as silicon steel sheets.

### (2.2.1.2) Teeth

A plurality of teeth 32 (nine in Embodiment 1) are circumferentially provided on the inner peripheral surface of yoke 31 at equal intervals. The plurality of teeth 32 are integrally formed with yoke 31. The tip side (axial center 20 side) end portion of teeth 32 protruding from yoke 31 includes retaining protrusions that protrude on both sides in the circumferential direction around axial center 20.

### (2.2.2) Winding

Windings 33 are wound around stator core 30. Windings 33 include motor windings 4 and suspension windings 5.

### (2.2.2.1) Motor Winding

Motor windings 4 generate torque in rotor 2. Motor winding 4 is wound around each of the plurality of teeth 32. Motor winding 4 includes main winding 41 and auxiliary winding 42.

### (2.2.2.1.1) Main Winding

Main windings 41 generate torque in rotor 2. Each main winding 41 is wound around the tip-side (axial center 20 side) end portion of tooth 32 protruding from yoke 31. Each main winding 41 is wound around the portion of tooth 32 closer to the base side (yoke 31 side) than the retaining protrusions are. In Embodiment 1, bearingless motor 1 is a three-phase AC motor. Therefore, as main windings 41, three U-phase windings, three V-phase windings, and three W-phase windings are wound around teeth 32 (nine teeth 32 in total).

### (2.2.2.1.2) Auxiliary Winding

Auxiliary windings 42 are independent of main windings 41. Although the main purpose of providing auxiliary windings 42 is not to increase the torque of rotor 2, the resulting increase or decrease in torque of rotor 2 is acceptable. The main purpose of providing auxiliary windings 42 is to reduce the spatial order components of the magnetomotive force distribution that are not involved in the torque of rotor 2, which will be described in detail later.

In Embodiment 1, as auxiliary windings 42, three U-phase windings, three V-phase windings, and three W-phase windings are wound around teeth 32 (nine teeth in total). The phase types of auxiliary winding 42 and main winding 41 wound around the same tooth 32 may be identical to or different from each other among the U phase, V phase, and W phase.

### (2.2.2.1.3) Number of Turns of Main Windings and Auxiliary Windings

The number of turns of auxiliary winding 42 wound around one of the plurality of teeth 32 is less than the number of turns of main winding 41 wound around the same one of the plurality of teeth 32.

The number of turns of motor winding 4 wound around each of the plurality of teeth 32 is equal to each other. In other words, the total number of turns of main winding 41 and auxiliary winding 42 wound around each of the plurality of teeth 32 is equal to each other.

### (2.2.2.2) Suspension winding

Suspension windings 5 are independent of motor windings 4. Suspension windings 5 generate a support force that supports rotor 2 in the radial direction (the direction orthogonal to axial center 20). In other words, suspension windings 5 adjust the radial position of rotor 2 relative to stator 3. Specifically, suspension windings 5 generate a two-pole (spatial order is one) magnetic field in stator 3, which applies a radial force to rotor 2, thereby providing a support force for rotor 2. Rotor 2 is passively supported in the direction in which axial center 20 extends. For example, in Embodiment 1, as illustrated in FIG. 2, rotor 2 is passively supported at a position where the gravity acting on rotor 2 and the magnetic attractive force between rotor 2 and stator 3 are balanced.

In Embodiment 1, as illustrated in FIG. 1, as suspension windings 5, three U-phase windings, three V-phase windings, and three W-phase windings are wound around teeth 32 (nine teeth in total).

### (2.3) Circuit Board

Although not illustrated, bearingless motor 1 includes a circuit board. The circuit board is provided on stator 3 to supply current to windings 33. A controller formed of a microprocessor or the like is mounted on the circuit board. The controller controls the current supplied to each of main windings 41, auxiliary windings 42, and suspension windings 5.

### (2.4) Magnetomotive Force and Support Force

As described above, in bearingless motor 1, motor windings 4 generate torque in rotor 2, and suspension windings 5 generate a support force that supports rotor 2.

The distribution of the magnetomotive force generated by windings 33 will be described. As illustrated in FIG. 1, θ (rad) is defined as the angle between a given point of stator 3 and reference line 11 around axial center 20 in a view from the direction in which axial center 20 extends. Here, F(θ) is defined as the function of the magnetomotive force relative to angle θ.

It is known that when the components of the orders not involved in the torque of rotor 2 are large in the Fourier series expansion of function F(θ) of the magnetomotive force generated by windings 33, the support force for rotor 2 pulsates or the direction in which the support force that supports rotor 2 is generated varies. In bearingless motor 1 illustrated in FIG. 1, the number of pole pairs of rotor 2 is 4. Hence, the order involved in the torque of rotor 2 is 4, and the orders that are not involved in the torque of rotor 2 are natural numbers other than 4. In other words, when the number of pole pairs of rotor 2 is M (a natural number), the order involved in the torque of rotor 2 is M, and the orders that are not involved in the torque of rotor 2 are natural numbers other than M. Therefore, in order to reduce pulsations of the support force for rotor 2 and variations in the direction in which the support force is generated, among the components of respective orders in the Fourier series expansion of function F (θ), smaller component values (absolute values) are preferable in all orders except the order of M. In particular, a smaller (M±1) order component is preferable. In the case of a consequent pole motor or a homopolar motor, smaller one-pole and two-pole components are particularly preferable.

### (2.5) Summary of Embodiment 1

(2.5.1)
The number of turns of auxiliary winding 42 is adjusted to reduce the components of the orders not involved in the torque of rotor 2 in the Fourier series expansion of function F(θ) of the magnetomotive force. By doing so, the pulsations of the support force for rotor 2 and variations in the direction in which the support force is generated are reduced. This facilitates a stabilized support force.

In particular, auxiliary windings 42 are configured to reduce the second order component in the Fourier series expansion of function F(θ) of the magnetomotive force. This efficiently reduces the pulsations of the support force for rotor 2 and variations in the direction in which the support force is generated.

(2.5.2)
The number of turns of auxiliary winding 42 wound around one of the plurality of teeth 32 is less than the number of turns of main winding 41 wound around the same one of the plurality of teeth 32. This reduces the number of turns of auxiliary winding 42, which has a relatively low contribution to the torque generation, thereby preventing the output (torque and power) of bearingless motor 1 from decreasing.

(2.5.3)
The number of turns of motor winding 4 wound around each of the plurality of teeth 32 is equal to each other. With this, even when motor winding 4 of the same wire diameter is used for main winding 41 and auxiliary winding 42, it is possible to set the total cross-sectional areas of main winding 41 and auxiliary winding 42 wound around each of the plurality of teeth 32 to be equal to each other. This eliminates the waste of the occupancy of main winding 41 and auxiliary winding 42, leading to a reduction in copper loss.

### (3) Embodiment 2

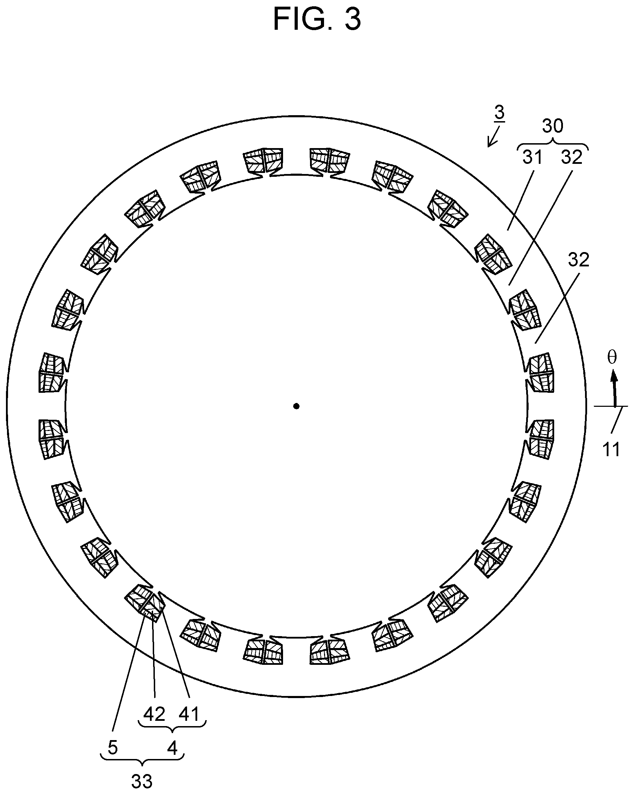

Next, bearingless motor 1 according to Embodiment 2 will be described below with reference to FIG. 3 to FIG. 5B. Since bearingless motor 1 according to Embodiment 2 is mostly identical to bearingless motor 1 according to Embodiment 1, the same reference numerals are assigned to the duplicate components, and detailed descriptions thereof are omitted.

Bearingless motor 1 according to Embodiment 1 is a three-phase AC motor in which the number of poles is 8 and the number of slots is 9, whereas bearingless motor 1 according to Embodiment 2 is a three-phase AC motor in which the number of poles is 20 and the number of slots is 24.

The phase types of U, V and W and the winding polarity of main winding 41 wound around one of the plurality of teeth 32 and the phase type and the winding polarity of auxiliary winding 42 wound around the same one of the plurality of teeth 32 are defined. Here, the winding polarity is defined by whether the current flowing through winding 33 wound around tooth 32 is clockwise or counterclockwise, when tooth 32 is viewed from axial center 20.

Main winding 41 and auxiliary winding 42 wound around each of the plurality of teeth 32 are represented in the parenthesis that indicates (phase type and winding polarity of main winding 41/ phase type and winding polarity of auxiliary winding 42).

Moreover, parentheses for adjacent ones of the plurality of teeth 32 are arranged side by side. Here, the parentheses for the plurality of teeth 32 are represented by a repeat of (U+/W-) (U-/V+) (V-/U+) (V+/W-) (W+/V-) (W-/U+) (U-/W+) (U+/V-) (V+/U-) (V-/W+) (W-/V+) (W+/U-).

Moreover, ratio N of the number of turns of auxiliary winding 42 wound around one of the plurality of teeth 32 to the number of turns of main winding 41 wound around the same one of the plurality of teeth 32 satisfies 0.222 ≤ N ≤ 0.511.

This reduces the second order component in the Fourier series expansion of function F(θ) of the magnetomotive force, efficiently reducing the pulsations of the support force for rotor 2 and variations in the direction in which the support force is generated. Furthermore, according to the analysis results, the amount of pulsations of the support force for rotor 2 caused due to the second order component of the magnetomotive force can be reduced to at most 5% of the mean value of the support force. When the number of poles of rotor 2 is 20 (10 pole pairs), the pulsations of the support force for rotor 2 due to the second order component of the magnetomotive force is 10th order component that pulsates ten times when the rotor makes one rotation.

In particular, it is preferrable that ratio N of the number of turns satisfies 0.322 ≤ N ≤ 0.383. This further reduces the second order component in the Fourier series expansion of function F(θ) of the magnetomotive force, efficiently reducing the pulsations of the support force for rotor 2 and variations in the direction in which the support force is generated. According to the analysis results, the 10th order component of the pulsations of the support force can be reduced to at most 1% of the mean value of the support force.

Moreover, it is preferrable here that ratio N of the number of turns is set to any one of 1/3, 3/8, 4/11, 5/14, 6/17, 7/19, 7/20, 8/21, 8/23, 9/25, 9/26, 10/27, 10/29, 11/29, 11/30, 11/31, 11/32, 12/35, 13/34, 13/35, 13/36, or 13/37. This allows ratio N of the number of turns to be set to an integer ratio, facilitating a reduction in the second order component in the Fourier series expansion of function F(θ) of the magnetomotive force, and efficiently reducing the pulsations in the support fore for rotor 2 and variations in the direction in which the support force is generated.

### (3.1) Conventional Example

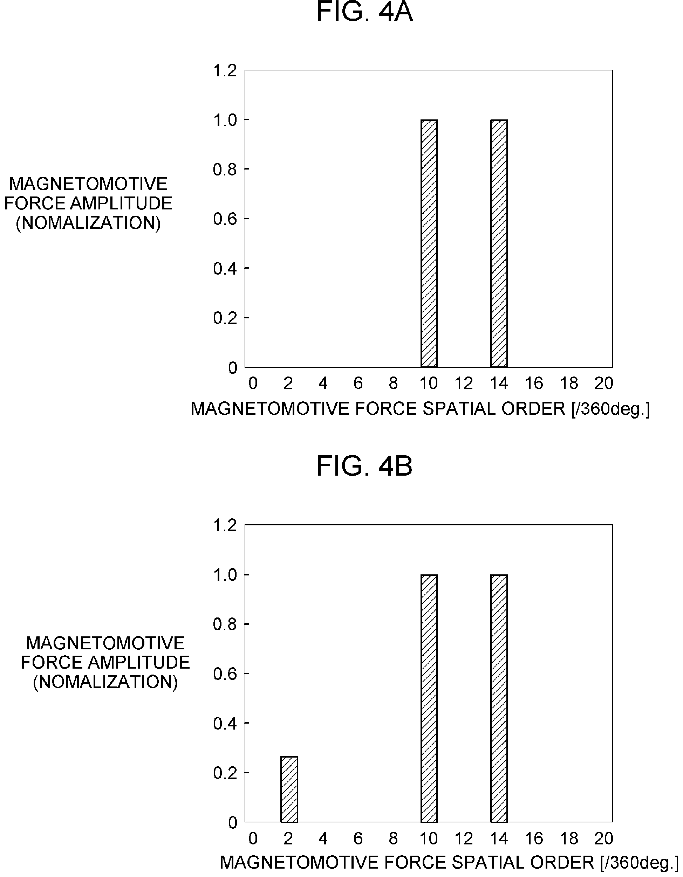

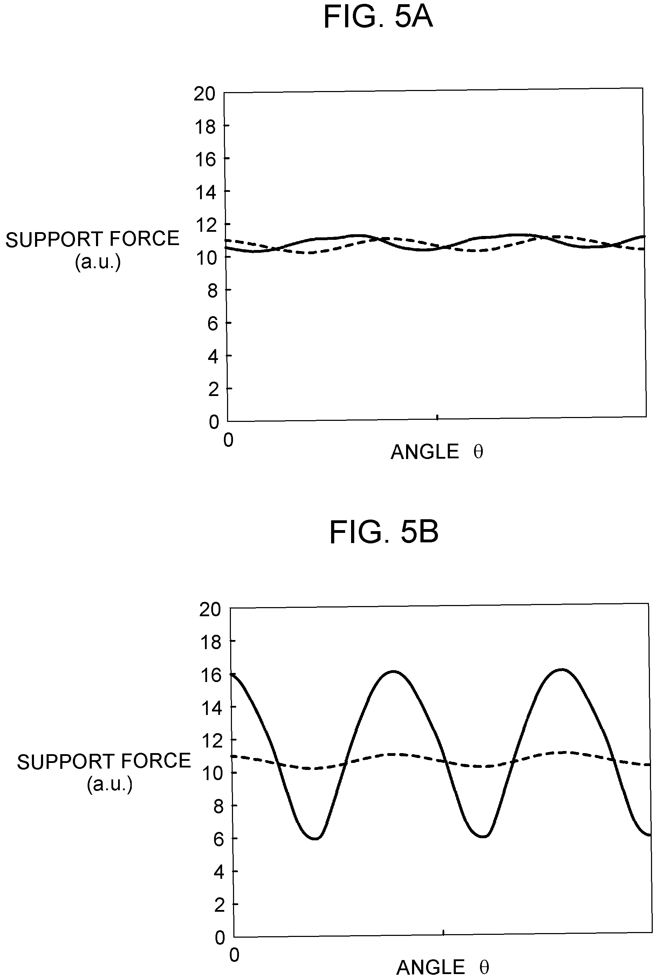

FIG. 4B illustrates a relationship between each spatial order component and magnitude (amplitude) in each component in the Fourier series expansion of function F(θ) of the magnetomotive force according to a conventional example. FIG. 5B illustrates a relationship between support force for rotor 2 and angle θ in bearingless motor 1 according to the conventional example. In the conventional example, as illustrated in FIG. 4B, the second order component in the Fourier series expansion of function F(θ) of the magnetomotive force is high. Here, as illustrated in FIG. 5B, it is understood that the support force for rotor 2 significantly pulsates.

### (3.2) Present Disclosure (Embodiment 2)

In Embodiment 2 of the present disclosure, auxiliary windings 42 are configured to reduce the components of the orders not involved in the torque of rotor 2 in the Fourier series expansion of function F(θ) of the magnetomotive force. Specifically, a reduction in the components of the orders not involved in the torque of rotor 2 in the Fourier series expansion of function F(θ) of the magnetomotive force can be achieved by the winding method (the number of turns (ratio of the number of turns), combination of the phase types of U, V, and W, winding polarity, etc.) of main winding 41 and auxiliary winding 42 around each of the plurality of teeth 32, and a controller included in the circuit board (more specifically, a control program for the controller to perform control).

FIG. 4A illustrates a relationship between each spatial order component and magnitude (amplitude) in each component in the Fourier series expansion of function F(θ) of the magnetomotive force according to Embodiment 2. Moreover, FIG. 5A illustrates a relationship between support force for rotor 2 and angle θ in bearingless motor 1 according to Embodiment 2. In Embodiment 2, as illustrated in FIG. 4A, the second order component in the Fourier series expansion of function F(θ) of the magnetomotive force is almost zero. Here, as illustrated in FIG. 5A, it is understood that the pulsations of the support force for rotor 2 is small. In consequent pole bearingless motor 1, in particular, the secondary component significantly affects the pulsations of the support force. Therefore, reducing the second order component of the orders that are not involved in the torque of rotor 2 is the most effective in reducing the pulsations in the support force and variations in the direction in which the support force is generated.

### (4) Variations

Bearingless motor 1 is not limited to the consequent pole motor, but, for example, may be a homopolar motor. In homopolar bearingless motor 1, in particular, the second order component significantly affects the pulsations of the support force. Therefore, reducing the second order component of the orders not involved in the torque of rotor 2 is the most effective in reducing the pulsations in the support force and variations in the direction in which the support force is generated.

Bearingless motor 1 is not limited to the three-phase AC motor. Bearingless motor 1 is not limited to an inner rotor motor, but may be an outer rotor motor.

The shape of rotor core 21 is not limited to a circular ring. Rotor core 21 may be in a shape of a solid cylinder. Rotor core 21 does not have to be uniformly shaped around axial center 20.

The number of poles in rotor 2 is not limited to 20 or 28. The number of magnets 22 provided on rotor 2 is not limited.

Yoke 31 does not have to have a circular ring shape when viewed from the axial direction. In other words, yoke 31 may have a non-circular ring shape instead of a circular ring shape when viewed from the axial direction. Yoke 31 does not always have to have a ring shape.

The number of teeth 32 of stator core 30 is not limited.

Teeth 32 may be formed separately from yoke 31, and may be integrally attached to yoke 31 by mating, fastening, or the like. In this case, teeth 32 may be formed of the same material as yoke 31, such as an electromagnetic steel sheet.

Motor windings 4 do not have to be wound around all of the plurality of teeth 32.

Main windings 41 do not always have to be wound around the end portions of the plurality of teeth 32 (axial center 20 side).

Auxiliary windings 42 do not always have to be wound around teeth 32 at the portions closer to the base (yoke 31 side) than main windings 41 are, but may be wound around teeth 32 at the portions closer to the tip end (axial center 20 side) than main windings 41 are. Even when bearingless motor 1 is a three-phase AC motor, the phase types of U, V, and W are not always required for auxiliary windings 42.

The number of turns of auxiliary winding 42 wound around one of the plurality of teeth 32 may be greater than the number of turns of main winding 41 wound around the same one of the plurality of teeth 32.

The number of turns of motor winding 4 wound around each of the plurality of teeth 32 does not have to be equal to each other.

Suspension windings 5 do not always have to be wound around teeth 32 at the portions closer to the base (yoke 31 side) than auxiliary windings 42 are, but may be wound around teeth 32 at the portions closer to the tip end (axial center 20 side) than auxiliary windings 42 are. Suspension windings 5 do not always have to be wound around teeth 32 at the portions closer to the base (yoke 31 side) than main windings 41 are, but may be wound around teeth 32 at the portions closer to the tip end (axial center 20 side) than main windings 41 are. Suspension windings 5 may be wound around yoke 31 instead of teeth 32. The phase types of U, V, and W are not always required for suspension windings 5.

### (5) Conclusion

As described above, the bearingless motor (1) according to a first aspect includes a rotor (2) and a stator (3). The stator (3) includes a stator core (30) and a winding (33) wound around the stator core (30). The winding (33) includes a motor winding (4) and a suspension winding (5). The motor winding (4) generates a magnetomotive force that generates a torque in the rotor (2). The suspension winding (5) is independent of the motor winding (4), and adjusts a position of an axial center (20) of the rotor (2) relative to the stator (3). The motor winding (4) includes a main winding (41) that generates the magnetomotive force and an auxiliary winding (42) that is independent of the main winding (41). The auxiliary winding (42) is configured to reduce a component of an order that is not involved in the torque of the rotor (2) in a Fourier series expansion of F (θ). θ (rad) is an angle between a given point of the stator (3) and a reference line (11) around the axial center (20). F (θ) is a function of the magnetomotive force relative to the angle θ.

With the first aspect, the pulsations of the support force for the rotor (2) and the variations in the direction in which the support force is generated are reduced, facilitating a stabilized support force for the rotor (2).

A second aspect can be achieved by a combination with the first aspect. According to the second aspect, the stator core (30) includes: a yoke (31) that has a ring shape; and a plurality of teeth (32) that protrude from an inner peripheral surface of the yoke (31) toward a center of the yoke (31). The motor winding (4) is wound around each of the plurality of teeth (32). A total number of turns of the auxiliary winding (42) wound around one of the plurality of teeth (32) is less than a total number of turns of the main winding (41) wound around the one of the plurality of teeth (32).

With the second aspect, the number of turns of auxiliary winding (42), which does not contribute to the magnetomotive force, is reduced, thereby preventing the output (torque and power) of the bearingless motor (1) from decreasing.

A third aspect can be achieved by a combination with the first aspect or the second aspect. According to the third aspect, the bearingless motor (1) is a consequent pole motor or a homopolar motor. Auxiliary winding (42) is configured to reduce a second order component in the Fourier series expansion of F(θ).

With the third aspect, the pulsations of the support force for the rotor (2) and the variations in the direction in which the support force is generated are efficiently reduced, facilitating a stabilized support force for the rotor (2).

A fourth aspect can be achieved by a combination with the second aspect or the third aspect. According to the fourth aspect, a total number of turns of the motor winding (4) wound around each of the plurality of teeth (32) is equal to each other.

With the fourth aspect, it is possible to set the total cross-sectional areas of main winding (41) and auxiliary winding (42) wound around each of the plurality of teeth 32 to be equal to each other. This eliminates the waste of the occupancy of main winding (41) and auxiliary winding (42), leading to a reduction in copper loss.

A fifth aspect can be achieved by a combination with any one of the second aspect to the fourth aspect. According to the fifth aspect, the bearingless motor (1) is a three-phase AC motor in which a total number of poles is 20 and a total number of slots is 24, or a total number of poles is 28 and a total number of slots is 24. The parentheses for the plurality of teeth (32) are represented by a repeat of (U+/W-) (U-/V+) (V-/U+) (V+/W-) (W+/V-) (W-/U+) (U-/W+) (U+/V-) (V+/U-) (V-/W+) (W-/V+) (W+/U-). A ratio N satisfies 0.222 ≤ N ≤ 0.511. A phase type and a winding polarity of the main winding (41) wound around one of the plurality of teeth (32) and the phase type and the winding polarity of the auxiliary winding (42) wound around the one of the plurality of teeth (32) are represented in a parenthesis that indicates (the phase type and the winding polarity of the main winding (41) / the phase type and the winding polarity of the auxiliary winding (42)). The phase type is one of a U phase, a V phase, or a W phase. Two parentheses for adjacent ones of the plurality of teeth (32) are arranged side by side. The ratio N is a ratio of a total number of turns of the auxiliary winding (42) wound around the one of the plurality of teeth (32) to the number of turns of the main winding (41) wound around the one of the plurality of teeth (32).

With the fifth aspect, the second order component in the Fourier series expansion of function F(θ) of the magnetomotive force is reduced, so that the pulsations of the support force for rotor 2 and variations in the direction in which the support force is generated are efficiently reduced. In addition, the 10th order component of the pulsations of the support force can be reduced to at most 5 %.

A sixth aspect can be achieved by a combination with the fifth aspect. According to the sixth aspect, the ratio N satisfies 0.322 ≤ N ≤ 0.383.

With the sixth aspect, the second order component in the Fourier series expansion of function F(θ) of the magnetomotive force is further reduced, so that the pulsations of the support force for rotor 2 and variations in the direction in which the support force is generated are efficiently reduced.

A seventh aspect can be achieved by a combination with the fifth aspect. According to the seventh aspect, the ratio N is one of 1/3, 3/8, 4/11, 5/14, 6/17, 7/19, 7/20, 8/21, 8/23, 9/25, 9/26, 10/27, 10/29, 11/29, 11/30, 11/31, 11/32, 12/35, 13/34, 13/35, 13/36 or 13/37.

With the seventh aspect, ratio N of the number of turns can be set to an integer ratio, and the second order component in the Fourier series expansion of function F(θ) of the magnetomotive force is reduced, so that the pulsations of the support force for rotor (2) and variations in the direction in which the support force is generated are efficiently reduced.

### REFERENCE MARKS IN THE DRAWINGS

- 1: bearingless motor
- 11: reference line
- 2: rotor
- 20: axial center
- 21: rotor core
- 22: magnet
- 3: stator
- 30: stator core
- 31: yoke
- 32: teeth
- 33: winding
- 4: motor winding
- 41: main winding
- 42: auxiliary winding
- 5: suspension winding

## Claims

1. A bearingless motor comprising:
a rotor; and
a stator,
wherein the stator includes:
a stator core; and
a winding wound around the stator core,
the winding includes:
a motor winding that generates a magnetomotive force that generates a torque in the rotor; and
a suspension winding that is independent of the motor winding, the suspension winding adjusting a position of an axial center of the rotor relative to the stator,
the motor winding includes:
a main winding that generates the magnetomotive force; and
an auxiliary winding that is independent of the main winding, and
the auxiliary winding is configured to reduce a component of an order that is not involved in the torque of the rotor in a Fourier series expansion of F (θ),
where θ (rad) is an angle between a given point of the stator and a reference line around the axial center in a view from a direction in which the axial center extends, and
F (θ) is a function of the magnetomotive force relative to the angle θ.

2. The bearingless motor according to claim 1,
wherein the stator core includes:
a yoke that has a ring shape; and
a plurality of teeth that protrude from an inner peripheral surface of the yoke toward a center of the yoke,
the motor winding is wound around each of the plurality of teeth, and
a total number of turns of the auxiliary winding wound around one of the plurality of teeth is less than a total number of turns of the main winding wound around the one of the plurality of teeth.

3. The bearingless motor according to claim 2,
wherein the bearingless motor is a consequent pole motor or a homopolar motor, and
the auxiliary winding is configured to reduce a second order component in the Fourier series expansion of F (θ).

4. The bearingless motor according to claim 2 or claim 3,
wherein a total number of turns of the motor winding wound around each of the plurality of teeth is equal to each other.

5. The bearingless motor according to claim 2 or claim 3,
wherein the bearingless motor is a three-phase AC motor in which a total number of poles is 20 and a total number of slots is 24, or a total number of poles is 28 and a total number of slots is 24,
parentheses for the plurality of teeth are represented by a repeat of (U+/W-) (U-/V+) (V-/U+) (V+/W-) (W+/V-) (W-/U+) (U-/W+) (U+/V-) (V+/U-) (V-/W+) (W-/V+) (W+/U-), and
a ratio N satisfies 0.222 ≤ N ≤ 0.511
where a phase type and a winding polarity of the main winding wound around one of the plurality of teeth and the phase type and the winding polarity of the auxiliary winding wound around the one of the plurality of teeth are represented in a parenthesis that indicates (the phase type and the winding polarity of the main winding / the phase type and the winding polarity of the auxiliary winding), the phase type is one of a U phase, a V phase, or a W phase, and two parentheses for adjacent ones of the plurality of teeth are arranged side by side, and
the ratio N is a ratio of the total number of turns of the auxiliary winding wound around the one of the plurality of teeth to the total number of turns of the main winding wound around the one of the plurality of teeth.

6. The bearingless motor according to claim 5,
wherein the ratio N satisfies 0.322 ≤ N ≤ 0.383.

7. The bearingless motor according to claim 5,
wherein the ratio N is one of 1/3, 3/8, 4/11, 5/14, 6/17, 7/19, 7/20, 8/21, 8/23, 9/25, 9/26, 10/27, 10/29, 11/29, 11/30, 11/31, 11/32, 12/35, 13/34, 13/35, 13/36 or 13/37.
